# EUROPÄISCHE PATENTANMELDUNG

(11) **EP 1 235 338 A2**
(43) Veröffentlichungstag der Anmeldung: **28.08.2002**
(21) Anmeldenummer: 02100165.6
(22) Anmeldetag: 21.02.2002
(51) Int. Cl.: H02M 7/08

(54) **Schaltung zur Umwandlung von Wechselspannung in Gleichspannung**

(30) Priorität: 31.05.2001 DE 10126160; 22.02.2001 DE 10108431
(71) Anmelder: Philips Corporate Intellectual Property GmbH, 52064 Aachen (DE); Koninklijke Philips Electronics N.V., 5621 BA Eindhoven (NL)
(72) Erfinder: Dürbaum, Thomas, Dr., 52066, Aachen (DE)
(74) Vertreter: Volmer, Georg, Dipl.-Ing.

(57) **Zusammenfassung**

Die Erfindung betrifft eine Schaltung zur Umwandlung von Wechselspannung in Gleichspannung für einen oder zwei Verbraucher (Rm, Ra), bei der ein erster Teil des Stromes über eine große Induktionsspule (L50) und einen ersten Gleichrichter (Gm) und ein zweiter Teil des Stromes über einen zweiten Gleichrichter (Ga) vor der großen Induktionsspule in der Eingangsseite zugeleitet wird. Dabei ist ausgangsseitig hinter dem zweiten Gleichrichter (Ga) ein Schaltnetzteil, vorzugsweise in Form eines Hochsetzstellers oder eines Sperrwandlers (10), angeordnet. Durch die Aufteilung des zugeführten Stromes kann die Induktionsspule (L50) zur Glättung der Ausgangsspannung entsprechend kleiner dimensioniert werden, und trotzdem kann die Schaltung gleichzeitig einschlägige Normvorschriften erfüllen.

## Beschreibung

Die Erfindung betrifft eine Schaltung zur Umwandlung von Wechselspannung in eine Gleichspannung für mindestens einen Verbraucher, enthaltend
- zwei externe Anschlüsse zur Einspeisung einer Wechselspannung,
- ein Gleichrichtermodul, dessen zwei Eingänge über Verbindungsleitungen mit den zwei genannten externen Anschlüssen verbunden sind und welches zwei Ausgangsleitungen mit Außenanschlüssen für die Ankopplung mindestens eines Verbrauchers aufweist,
- mindestens eine in wenigstens einer der Verbindungsleitungen zwischen den externen Anschlüssen und dem Gleichrichtermodul angeordnete Induktionsspule.

Eine Vielzahl von elektrischen oder elektronischen Geräten benötigt für ihren Betrieb eine Gleichspannung, welche aus der Wechselspannung des Stromversorgungsnetzes bereitgestellt beziehungsweise erzeugt werden muss. Stellvertretend für derartige Endgeräte sei ein Fernsehgerät (TV) genannt. Die in solchen Geräten eingesetzten Schaltungen zur Umwandlung der Wechselspannung in Gleichspannung müssen bestimmte Anforderungen hinsichtlich ihres Umwandlungsverhaltens, insbesondere hinsichtlich des verbleibenden Anteils von Netzharmonischen erfüllen. Derartige Anforderungen sind nicht zuletzt Gegenstand von Normen, wobei diesbezüglich insbesondere die CEI/IEC 61000-3-2, SECOND EDITION, 2000-08 zu nennen ist, welche in Europa von Endgeräten, die mehr als 75 W Leistungsaufnahme aufweisen, ab dem Jahr 2001 zu erfüllen ist.

Zur Gewährleistung der Einhaltung der genannten Qualitätsnormen gibt es verschiedene Möglichkeiten mit verschiedenen optimalen Leistungsbereichen. Für große Leistungen ab ca. 500 W überwiegen aktive Lösungen. Im kleineren Leistungsbereich findet man dagegen häufig 50 Hz-Spulen. Diese sind verhältnismäßig preiswert, jedoch auch verhältnismäßig groß und schwer. Diese Größe bzw. diese konzentrierten Massen führen zu Problemen mit dem verfügbaren Platz auf gedruckten Leiterplatten bzw. zu Problemen bei der Stoßfestigkeit der hergestellten Geräte.

Die genannten Probleme treten insbesondere auch bei Anwendungen auf, die mehr als ein Schaltnetzteil enthalten. Ein Beispiel hierfür sind moderne TV-Geräte, bei denen das zweite Netzteil für den Stand-by Betrieb notwendig ist und im Normalbetrieb z.B. die Logik-ICs versorgt.

Vor diesem Hintergrund war es Aufgabe der vorliegenden Erfindung, eine Schaltung zur Umwandlung von Wechselspannung in Gleichspannung für mindestens einen Verbraucher bereitzustellen, welche eine ausreichende Qualität des Umwandlungsverhaltens bei begrenztem Platz- und Kostenaufwand gewährleistet und welche insbesondere für Anwendungen mit zwei Schaltnetzteilen geeignet ist.

Diese Aufgabe wird durch eine Schaltung mit den Merkmalen des Anspruchs 1 gelöst. Vorteilhafte Ausgestaltungen sind in den Unteransprüchen enthalten.

Die Schaltung zur Umwandlung von Wechselspannung in Gleichspannung für mindestens einen Verbraucher enthält demnach folgende Bestandteile:
(a) Zwei externe Anschlüsse (EA) an die die Pole einer externen Wechselspannungsquelle angelegt werden können.
(b) Ein Gleichrichtermodul bekannter Bauart, dessen zwei Eingänge über Verbindungsleitungen jeweils mit einem der genannten externen Anschlüsse verbunden sind, und welches zwei Ausgangsleitungen aufweist, an die mindestens ein Verbraucher angeschlossen werden kann.
(c) Mindestens eine Induktionsspule, welche in einer der Verbindungsleitungen angeordnet ist, die die externen Anschlüsse mit dem Gleichrichtermodul verbinden. Die Induktionsspule hat die Aufgabe, den Nachladestrom abzuflachen bzw. den Oberwellenanteil des Nachladestroms zu reduzieren.

Die Schaltung ist dadurch gekennzeichnet, dass mindestens ein zweites Gleichrichtermodul vorhanden ist, dessen zwei Eingänge jeweils mit einem externen Anschluss verbunden sind, ohne dass in der zugehörigen Verbindung eine Induktionsspule angeordnet ist. Ferner weist das Gleichrichtermodul zwei Ausgangsleitungsn für den Anschluss mindestens eines Verbrauchers auf. Dabei ist in den Ausgangsleitungen ein Schaltnetzteil mit entsprechender Ansteuerung angeordnet, welches einen zumindest näherungsweise sinusförmigen Eingangsstrom aufweist. Das heißt, dass der Eingangsstrom einen geringen Oberwellenanteil hat. Solche Netzteile, die auch AC-DC Wandler oder PFC (power factor correction circuit) genannt werden, sind der Literatur bekannt (vgl. Siemens "Schaltnetzteile" W. Hirschmann, A. Hauenstein, 1990, ISBN 3-8009-1550-2, Kapitel 6.1 bis 6.3).

In der erfindungsgemäßen Schaltung wird die als Wechselspannung von außen zugeführte Leistung über zwei getrennte Eingangspfade geleitet. Der eine Pfad führt dabei über das erste Gleichrichtermodul. In diesem Pfad befindet sich in bekannter Weise eine Induktionsspule, um eine Reduzierung des Oberwellenanteils des Nachladestroms zu bewirken. Daneben wird erfindungsgemäß ein zweiter Eingangspfad über das zweite Gleichrichtermodul eröffnet. Die hierdurch bei gleichbleibender Gesamtstromaufnahme eintretende Entlastung des ersten Eingangspfades kann dazu ausgenutzt werden, die in diesem Pfad befindliche Induktionsspule entsprechend kleiner auszulegen, weil die benötigte Induktivität kleiner gewählt werden kann. Auf diese Weise wird es möglich, Induktionsspulen mit drastisch reduzierter Größe zu verwenden, welche auch unter beengten Platzverhältnissen auf gedruckten Leiterplatten einsetzbar sind und Probleme mit der Stoßfestigkeit der Geräte vermeiden. Des weiteren wird die mit der erfindungsgemäßen Schaltung erzeugte Verlaufsform der Stromentnahme aus der Wechselspannungsquelle in vorteilhafter Weise verändert, so dass in einfacher Weise und mit reduziertem Aufwand Normvorschriften erfüllt werden können.

Während grundsätzlich verschiedenen Topologien für das Schaltnetzteil verwendet werden können, ist dieses vorzugsweise so eingerichtet, dass es mit einem sinusförmigen Strom betrieben werden kann. Daher werden vorzugsweise ein Hochsetzsteller (auch Boost Konverter oder Aufwärtsregler genannt) und/oder ein Sperrwandler (Flyback Konverter) eingesetzt, denn im Gegensatz zu vielen anderen Topologien können der Hochsetzsteller und der Sperrwandler bei entsprechender "normaler" Ansteuerung einen rein sinusförmigen Eingangsstrom erzeugen.

Alternativ kann das Schaltnetzteil (z.B. Hochsetzsteller oder Sperrwandler) auch nicht rein sinusförmig betrieben werden, sondern den Nachladeimpuls nutzen, um den an den externen Anschlüssen gezogenen Eingangsstrom so lange wie möglich sinusförmig zu halten.

Die erfindungsgemäße Schaltung kann in verschiedener Weise ergänzt werden, um verbesserte Ausgangssignale zu erhalten. So können die beiden Ausgangsleitungen des ersten Gleichrichtermoduls Gm über je einen Glättungskondensator gekoppelt sein. Durch diesen Glättungskondensator erfolgt eine Unterdrückung höherer Frequenzen in der Ausgangsspannung.

Im zweiten Ausgangspfad erfolgt die Kopplung dabei über den Ausgangskondensator des Schaltnetzteils (z.B. des Hochsetzstellers oder Sperrwandlers).

Im Folgenden wird die Erfindung mit Hilfe der Figuren beispielhaft erläutert. Es zeigt:
- Fig. 1: eine Schaltung nach dem Stand der Technik zur Versorgung von zwei Verbrauchern;
- Fig 2: eine Schaltung nach dem Stand der Technik zur Versorgung eines Verbrauchers;
- Fig 3: die bei einer Schaltung nach Figur 1 oder 2 eintretende Form der Stromentnahme;
- Fig 4: eine erfindungsgemäße Schaltung mit zwei Verbrauchern;
- Fig 5: die bei der Schaltung nach Figur 4 eintretende Form der Stromentnahme bei Betrieb des AC-DC Wandlers mit sinusförmigem Strom;
- Fig. 6: die bei der Schaltung nach Figur 4 eintretende Form der Stromentnahme bei Betrieb des AC-DC Wandlers bei Nutzung eines Teiles des Nachladeimpulses.

Die Erzeugung von Gleichspannungen zur Versorgung von elektronischen Endgeräten aus einer Wechselstrom-Netzspannung muss hinsichtlich der Umwandlung der Wechselspannung in Gleichspannung gewisse Mindestkriterien erfüllen. Für Verbraucher mit mehr als 75 W Leistungsaufnahme werden diese Anforderungen zum Beispiel in der zukünftigen Norm CEI/IEC 61000-3-2, SECOND EDITION, 2000-08 ausgedrückt. Verschiedene Verfahren zur Erfüllung dieser Norm sind bemüht, einen möglichst exakt sinusförmigen Eingangsstrom zu erzeugen. Eine derartige Sinusform ist von der Norm indes nicht zwingend vorgeschrieben.

Ein weit verbreitetes Verfahren zur Erfüllung von Qualitätsvorschriften besteht in einer passiven Lösung unter Verwendung einer sogenannten 50 Hz-Spule, welche den Eingangsstrom glättet. Dabei wird jedoch eine hohe Induktivität notwendig, um zum Beispiel die CEI/IEC 61000-3-2, SECOND EDITION, 2000-08 zu erfüllen. Die entsprechende Spule ist somit sehr groß und schwer, was Probleme bei ihrer Unterbringung auf einer gedruckten Platine sowie bei Stoßtesten der Geräte verursacht. Mit der vorliegenden Erfindung wird eine Schaltung zur Verfügung gestellt, welche die Verwendung kleinerer Spulen bei gleichzeitiger Erfüllung von Qualitätsvorschriften für die Umwandlung ermöglicht.

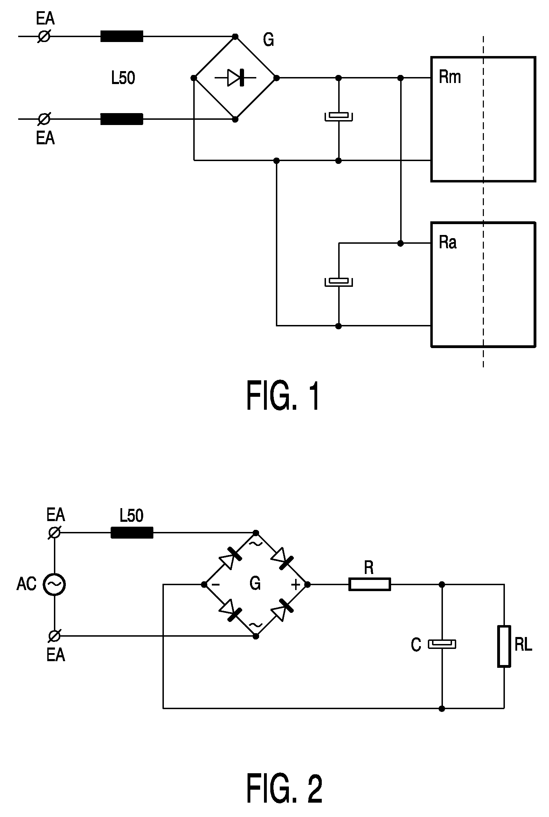

Figur 1 zeigt eine Schaltung nach dem Stand der Technik zur Versorgung zweier Verbraucher Rm, Ra mit Gleichspannung, die durch Umwandlung aus einer Wechselspannungsquelle gewonnen wird Diese Schaltung entspricht derjenigen aus Figur 2, wobei die beiden Verbraucher Rm, Ra parallel an die Ausgänge des Gleichrichtermoduls G gehängt sind.

Figur 2 zeigt die bekannte Schaltung zur Versorgung eines Verbrauchers RL mit Gleichspannung genauer. Die Leistung wird einer Wechselspannungsquelle AC entnommen und durch ein Gleichrichtermodul G in eine ungeregelte oder schwankende (mit "ripple" behaftete) Gleichspannung umgewandelt. An den Eingangsanschlüssen des Gleichrichters G wird die Wechselspannung eingespeist. In einer der Verbindungsleitungen oder in beiden Verbindungsleitungen des Gleichrichtermoduls G zu den externen Anschlüssen EA der Schaltung befindet sich dabei zur Glättung eine 50 Hz-Spule L50. An den Ausgangsanschlüssen "+", "-" des Gleichrichtermoduls G kann die Gleichspannung vom Verbraucher RL abgegriffen werden. Die beiden Ausgangsleitungen zu diesen Anschlüssen können über einen Glättungskondensator C gekoppelt sein. Ferner befindet sich häufig in einer Ausgangsleitung ein Widerstand R, um eine Begrenzung des Einschaltstroms zu erzielen.

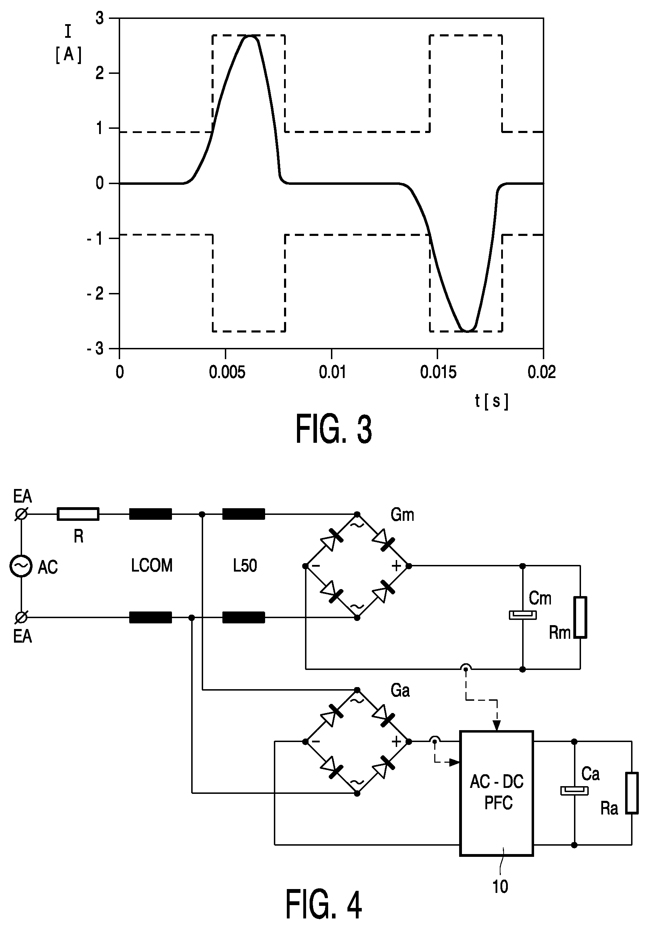

Die mit einer Schaltung nach Figur 1 beziehungsweise nach Figur 2 resultierende Kurvenform der Stromentnahme ist in Figur 3 dargestellt, wobei der Schaltung exemplarisch folgende Parameter zugrunde liegen: R = 1.5 Ohm, L50 = 32 mH, C = 220 µF, Uin = 230 V, f = 50 Hz, Po = 145 W.

In Figur 4 ist eine erfindungsgemäße Schaltung zur Versorgung von zwei Verbrauchern Rm, Ra dargestellt. Bei dieser Schaltung gibt es zwei verschiedene Pfade, über welche Energie aus der an den externen Anschlüssen EA anliegenden Wechselspannung (Netzversorgung) gezogen wird. Der erste Pfad geht über das erste Gleichrichtermodul Gm (m = "main"), der zweite Pfad über das zweite Gleichrichtermodul Ga (a = "aux"). Nur der erste Pfad verläuft eingangsseitig des ersten Gleichrichtermoduls Gm über die 50 Hz-Spule L50, während die Hilfsleistung für den zweiten Pfad vor der 50 Hz-Spule L50 entnommen wird.

Während der Ausgangspfad über das Gleichrichtermodul Gm die konventionelle Konfiguration aus Diodenbrücke und Elektrolytkondensator Cm nutzt, wird die Leistung für den zweiten Pfad aktiv mittels eines sinusförmigen Stromes zur Verfügung gestellt. Dies kann über ein Schaltnetzteil 10 (auch AC-DC Wandler oder PFC genannt) wie z.B. einen Hochsetzsteller (Boost Konverter) oder einen Sperrwandler geschehen, welches zwischen dem Gleichrichtermodul Ga und dem Verbraucher Ra angeordnet ist. Dabei wird über den ersten Pfad mit dem Gleichrichtermodul Gm vorzugsweise die größere Leistung bereitgestellt. Ebenso könnte er jedoch auch die kleinere Leistung verarbeiten.

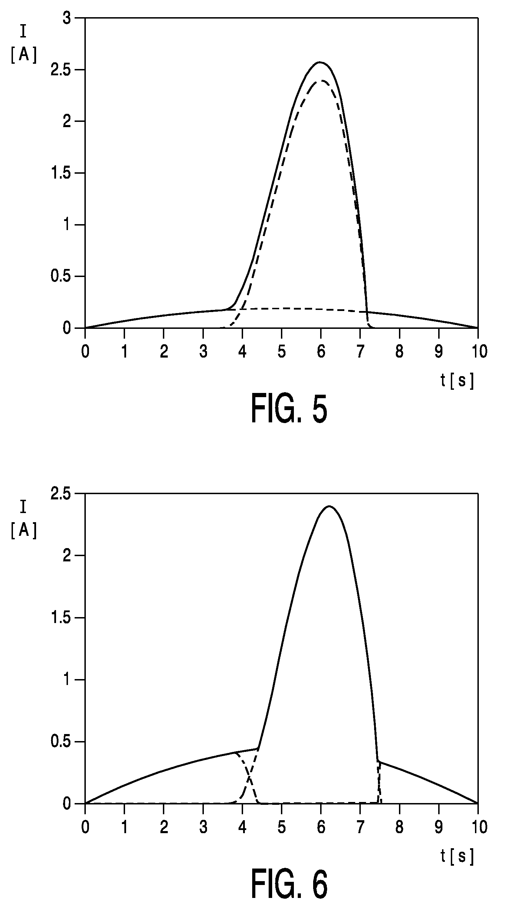

Figur 5 zeigt den resultierenden Signalverlauf der Stromentnahme an den externen Anschlüssen EA (50 Hz Eingangsstrom, eine Halbwelle) bei Anwendung der Schaltung nach Figur 4, wenn die Leistung für den Verbraucher Ra über einen sinusförmigen Strom durch das Gleichrichtermodul Ga zur Verfügung gestellt wird. Die resultierende Kurvenform des Eingangsstroms (durchgezogene Linie) besteht aus zwei Teilen, nämlich dem Strom durch das erste Gleichrichtermodul Gm (gestrichelte Linie) und dem Strom durch das zweite Gleichrichtermodul Ga (gepunktete Linie). Der Hauptwiederaufladungsimpuls wird durch die große 50 Hz-Spule L50 begrenzt.

Figur 6 zeigt den resultierenden Signalverlauf der Stromentnahme an den externen Anschlüssen EA (50 Hz Eingangsstrom, eine Halbwelle) bei Anwendung der Schaltung nach Figur 4, wenn die Leistung für den Verbraucher Ra nicht rein sinusförmig gezogen wird, sondern unter Nutzung eines Teils des Nachladeimpulses, um einen möglichst sinusförmigen Eingangsstrom zu bilden. Die resultierende Kurvenform des Eingangsstroms (durchgezogene Linie) besteht wiederum aus zwei Teilen, dem Strom durch das erste Gleichrichtermodul Gm (gestrichelt) und das zweite Gleichrichtermodul Ga (gepunktet). Wenn der Nachladeimpuls beginnt, wird dabei die Stromaufnahme durch das zweite Gleichrichtermodul Ga solange reduziert, bis sie negativ werden will (was aufgrund des Gleichrichtermoduls Ga nicht möglich ist). Hierzu muss der Nachladeimpuls im oberen Kreis erfasst werden. Dies kann nach gängigen Stromsensorprinzipien erfolgen.

In den Beispielen, die den Figuren 5 und 6 zugrunde liegen, kann die Spule L50 gegenüber dem Stand der Technik um einen Faktor von mehr als 2 kleiner gemacht werden (mit L x l² /2 als Näherungsmaß für die Größe der Spule).

Bei allen Vorschlägen kann die Verwendung nichtlinearer Magneten zur weiteren Reduzierung der Größe der magnetischen Komponenten verwendet werden.

### Bezugszeichenliste:

- AC: Wechselspannungsquelle
- C: Glättungskondensator
- Ca: Kondensator im zweiten Eingangspfad
- Cm: Kondensator im ersten Eingangspfad
- EA: Externer Anschluss
- Gm: Gleichrichter im ersten Eingangspfad ("main")
- Ga: Gleichrichter im zweiten Eingangspfad ("aux")
- 1: Strom
- L50: 50 Hz-Spule
- Lcom: Strom-Induktivität
- R: Ohmscher Widerstand
- RL: Verbraucher
- Rm, Ra: Verbraucher im ersten/zwiten Eingangspfad
- t: Zeit

## Patentansprüche

1. Schaltung zur Umwandlung von Wechselspannung in Gleichspannung für mindestens einen Verbraucher, enthaltend
- zwei externe Anschlüsse (EA) zur Einspeisung einer Wechselspannung,
- ein Gleichrichtermodul (Gm), dessen zwei Eingänge über Verbindungsleitungen mit den zwei genannten externen Anschlüssen (EA) verbunden sind und welches zwei Ausgangsleitungen mit Außenanschlüssen für die Ankopplung mindestens eines Verbrauchers (Rm) aufweist,
- mindestens eine in einer der Verbindungsleitungen zwischen den externen Anschlüssen (EA) und dem Gleichrichtermodul (Gm) angeordnete Induktionsspule (L50),
**dadurch gekennzeichnet,**
**dass** mindestens ein zweites Gleichrichtermodul (Ga) vorhanden ist, dessen zwei Eingänge ohne über die Induktionsspule (L50) zu verlaufen mit je einem der externen Anschlüsse (EA) verbunden sind und welches zwei Ausgangsleitungen für den Anschluss mindestens eines Verbrauchers (Ra) aufweist, wobei in den Ausgangsleitungen zwischen dem zweiten Gleichrichtermodul (Ga) und dem anzuschließenden Verbraucher ein Schaltnetzteil (10) angeordnet ist.

2. Schaltung nach Anspruch 1,
**dadurch gekennzeichnet,**
**dass** das Schaltnetzteil (10) so eingerichtet ist, dass es mit einem näherungsweise sinusförmigen Strom betrieben wird

3. Schaltung nach Anspruch 1 oder 2,
**dadurch gekennzeichnet,**
**dass** das Schaltnetzteil ein Hochsetzsteller oder ein Sperrwandler (10) ist.

4. Schaltung nach mindestens einem der Ansprüche 1 bis 3,
**dadurch gekennzeichnet,**
**dass** das Schaltnetzteil (10) so eingerichtet ist, dass es einen Teil des Nachladeimpulses nutzt, um einen möglichst sinusförmigen Strom an den beiden externen Anschlüssen (EA) zu ziehen.
